# EUROPEAN PATENT APPLICATION

(11) **EP 4 273 887 A1**
(43) Date of publication of application: **08.11.2023**
(21) Application number: 21913366.7
(22) Date of filing: 21.10.2021
(51) Int. Cl.: G21C 15/28

(54) **NUCLEAR POWER SUPPLY DEVICE**

(30) Priority: 31.12.2020 CN 202011635123
(71) Applicant: China Nuclear Power Technology Research Institute Co., Ltd., Shenzhen, Guangdong 518031 (CN); Ling Dong Nuclear Power Co., Ltd, Shenzhen, Guangdong 518000 (CN); China General Nuclear Power Corporation, Shenzhen, Guangdong 518028 (CN); CGN Power Co., Ltd., Shenzen, Guangdong 518028 (CN)
(72) Inventor: CHEN, Zhao, Shenzhen, Guangdong 518031 (CN); SHI, Kangli, Shenzhen, Guangdong 518031 (CN); DUAN, Chengjie, Shenzhen, Guangdong 518031 (CN); CUI, Dawei, Shenzhen, Guangdong 518031 (CN); QIU, Ruoxiang, Shenzhen, Guangdong 518031 (CN); SHI, Xiuan, Shenzhen, Guangdong 518031 (CN); LIN, Jiming, Shenzhen, Guangdong 518031 (CN)
(74) Representative: Noble, Nicholas
(86) International application number: PCT/CN2021/125291
(87) International publication number: WO 2022/142621

(57) **Abstract**

The present application relates to a nuclear power supply device, comprising a graphite base body, a plurality of fuel rods, a plurality of heat pipes, and a thermoelectric converter. The graphite base body is provided with a plurality of first through holes and a plurality of second through holes; the first through holes are filled with a liquid coolant; the fuel rods are respectively placed the first through holes and are used for generating heat energy; the liquid coolant passes the generated heat energy to the graphite base body; the heat energy on the graphite base body is then transferred to the thermoelectric converter by the heat pipes placed in the second through holes for thermoelectric conversion. The liquid coolant achieves a buffering effect between the fuel rods and the graphite base body, and achieves a transition effect for the heat energy transferred to the graphite base body from the fuel rods, thereby avoiding impact of the temperature gradient and swelling of the fuel rods on the graphite base body, and improving the safety of a nuclear reaction process.

## Description

### CROSS REFERENCE TO RELATED APPLICATION

The present application is based on and claims priority to Chinese Patent Application with No. 202011635123.4, titled "Nuclear Power Supply Device", and filed on December 31, 2020, the content of which is expressly incorporated herein by reference in its entirety.

### TECHNICAL FIELD

The present application relates to the field of nuclear reaction power generation technology, and particularly to a nuclear power supply device.

### BACKGROUND

Typical offshore and submarine observation equipment, such as offshore floating platforms, observation buoys, and submarine networks, have a strong demand for long-term stable supply of energy. Energy supply issues have become a bottleneck that restricts further understanding, exploration, and perception of the deep sea. For example, the submarine observation network is limited by the bottleneck problem that the cable power supply is difficult to lay over a large area in the deep sea, and generally, and needs to be equipped with low-power devices, which greatly limits the signal acquisition and transmission capabilities; and meanwhile, the laying of submarine cable is complicated and has great influence on the deep sea.

Compared to fossil energy and renewable energy, nuclear energy has the characteristics of high energy density, good stability, and low demand for refueling, and is an ideal form of deep-sea energy power. However, conventional nuclear power generation usually uses solid-state reactors to generate heat, which may face the stress problem caused by the temperature gradient and fuel swelling during the heat transfer, thereby affecting the safety of the process of the nuclear reaction.

### SUMMARY

In view of this, it is necessary to provide a nuclear power supply device capable of addressing the stress problem caused by the temperature.

A nuclear power supply device includes:
a graphite substrate provided with a plurality of first through tubes and a plurality of second through tubes, each first through tube being filled with a liquid coolant;
a plurality of fuel rods, each of which is respectively arranged in each first through tube and configured to generate thermal energy, the liquid coolant transferring the generated thermal energy to the graphite substrate;
a plurality of heat pipes, each of which has a first end and a second end, the first end of the heat pipe being arranged in a second through tube and configured to transfer the thermal energy on the graphite substrate; and
a thermoelectric converter connected to the second end of each heat pipe and configured to receive the thermal energy transferred by each heat pipe to perform a thermoelectric conversion on the thermal energy.

In an embodiment, the nuclear power supply device further includes:
a first thermoelectric power generation chip attached to the thermoelectric converter and configured to perform the thermoelectric conversion according to a temperature of a wall surface of the thermoelectric converter.

In an embodiment, the thermoelectric converter is an alkali metal thermoelectric converter.

In an embodiment, the nuclear power supply device further includes:
a neutron reflector wrapping outside the graphite substrate.

In an embodiment, the nuclear power supply device further includes:
an airtight container, the graphite substrate being located in the airtight container, and a liquid lead-bismuth fluid fills between the neutron reflector and the airtight container;
the airtight container being provided with a first through hole, and the heat pipe passes through the first through hole so that the first end is placed inside the second through tube.

In an embodiment, the nuclear power supply device further includes:
a second thermoelectric power generation chip attached to an outer wall of the airtight container and configured to generate electricity according to a temperature of the outer wall of the airtight container.

In an embodiment, the nuclear power supply device further includes:
a control drum provided in the neutron reflector and including a neutron absorption portion;
a pre-pressurization device connected to the control drum and configured to control a rotation of the control drum through a pneumatic pressurization mode to allow the neutron absorption portion to face the graphite substrate.

In an embodiment, the graphite substrate comprises a plurality of sub-substrates each of which is in a shape of a hexagonal prism and spliced together as a whole.

In an embodiment, the liquid coolant is a liquid lead-bismuth fluid.

In an embodiment, the heat pipe is a liquid alkali metal heat pipe.

The above-mentioned nuclear power supply device includes a graphite substrate, a plurality of fuel rods, a plurality of heat pipes and a thermoelectric converter. The graphite substrate is provided with a plurality of first through tubes and a plurality of second through tubes; each first through tube is filled with a liquid coolant, each fuel rod is placed in each first through tube and is configured to generate the thermal energy. The liquid coolant transfers the generated thermal energy to the graphite substrate, and then the thermal energy of the graphite substrate is transferred to the thermoelectric converter through the heat pipe placed in the second through tube to perform the thermoelectric conversion. Since the liquid coolant acts as a buffer between the fuel rod and the graphite substrate, and plays a transition role in the thermal energy transferred from the fuel rod to the graphite substrate, thereby avoiding the impacts of the temperature gradient and the swelling of the fuel rod on the graphite substrate, and improving the safety of the nuclear reaction process.

### BRIEF DESCRIPTION OF THE DRAWINGS

In order to more clearly illustrate the technical solution in the embodiments of the present invention, accompanying drawings required in the description of the embodiments or conventional technology will briefly introduced below. Obviously, the accompanying drawings in the following description are merely some embodiments of the present invention. Those skilled in the art can also obtain other drawings based on these drawings without making any creative effort.
FIG. 1 is a schematic structure diagram of a longitudinal section of a nuclear power supply device according to an embodiment.
FIG. 2 is a schematic structure diagram of a transverse section of a nuclear power supply device according to an embodiment.

### Reference signs:

101, graphite substrate; 102, heat pipe; 103, thermoelectric converter; 104, neutron reflector; 105, airtight container; 106, liquid lead-bismuth fluid; 107, first through tube; 108, second thermoelectric power generation chip; 109, control drum.

### DETAILED DESCRIPTION

In order to facilitate the understanding of the present application, the present application will be described more comprehensive below with reference to relevant accompanying drawings. Embodiments of the present invention are provided in the drawings. However, the present application can be embodied in many different modes and is not limited to the embodiments described herein. Rather, the purpose of providing these embodiments is to make the disclosure of the present application more thorough and comprehensive.

Unless otherwise defined, all technical and scientific terms used herein have the same meaning as commonly understood by one of ordinary skill in the art to which the present application belongs. The terms used herein in the description of the present application are only for the purpose of describing specific embodiments, and are not intended to limit the present application.

It should be appreciated that the terms "first", "second" and the like used in the present application may be used for describing various elements herein, but these elements are not limited by these terms. These terms are merely used for distinguishing one element from another element. For example, a first through tube can be referred to as a second through tube; and similarly, a second through tube can be referred to as a first through tube, without departing from the scope of the present application. Both the first through tube and the second through tube are through tubes, but they are not the same through tube.

It should be appreciated that the term "connection" in the following embodiments should be understood as "electric connection", "communication connection", etc., if the transmission of electric signals or data exists between the connected circuits, modules, units, etc.

When used herein, the singular forms "a", "an" and "the/said" may also include the plural forms unless the context clearly dictates otherwise. It should also be understood that the terms "comprising/comprising" or "having" etc., specify the presence of stated features, integers, steps, operations, components, parts or combinations thereof, but do not exclude the possibility of a presence or addition of one or more other features, integers, steps, operations, components, parts or combinations thereof. Meanwhile, the term "and/or" used in the present description includes any and all combinations of the related listed items.

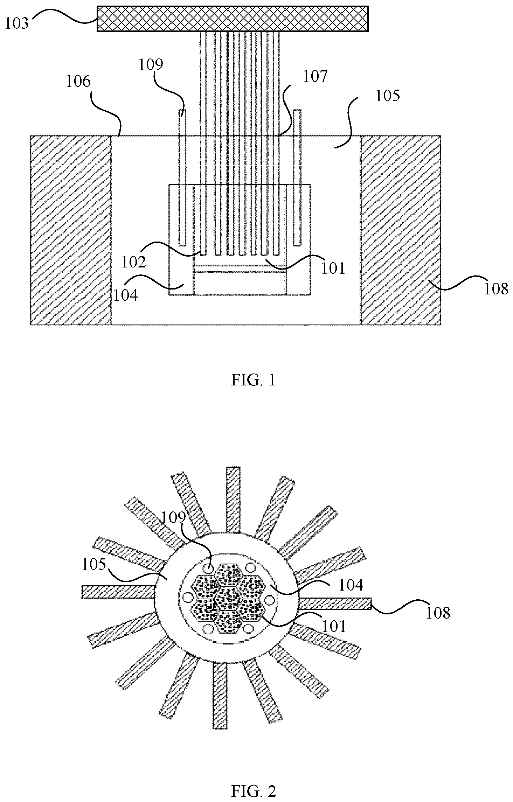

FIG. 1 is a schematic structure diagram of a nuclear power supply device according to an embodiment. As shown in FIG. 1, the nuclear power supply device includes a graphite substrate 101, a plurality of fuel rods, a plurality of heat pipes 102, and a thermoelectric converter 103. The graphite matrix 101 is provided with a plurality of first through tubes and a plurality of second through tubes; a first through tube is filled with a liquid coolant. Each of the plurality of fuel rods is respectively arranged in each of the plurality of first through tubes and is configured to generate thermal energy. The liquid coolant transfers the generated thermal energy to the graphite matrix 101; each of the plurality of heat pipes 102 has a first end and a second end. The first end of the heat pipe is arranged in the second through tube, and is configured to transfer the thermal energy on the graphite substrate. The thermoelectric converter 103 is connected to the second end of each heat pipe, and is configured to receive the thermal energy transferred by each heat pipe 102, to perform a thermoelectric conversion on the thermal energy.

It could be understood that the graphite matrix 101 is provided with a plurality of first through tubes and a plurality of second through tubes, a first through tube is configured to receive a fuel rod (not shown in FIG. 1), and a second through tube is configured to receive a heat pipe 102. During the normal operation of the reactor, the thermal energy generated by nuclear fission of the fuel rods is transferred to the graphite substrate 101, and then transferred from the graphite substrate 101 to the heat pipe 102, and finally transferred to the thermoelectric converter 103 for the thermoelectric conversion. Each of the first through tubes is filled with the liquid coolant, that is, the fuel rod is not directly in contact with the graphite matrix 101, but the liquid coolant is filled therebetween, and the thermal energy generated by the fuel rod may be transferred to the liquid coolant before being transferred to the graphite substrate 101.

It should be appreciated that fuel rod is usually made of a conventional solid material, which may generate a large amount of heat instantaneously when a nuclear fission reaction occurs, and meanwhile, a volume thereof may expand rapidly. Compared to the case where the fuel rod is directly arranged into the graphite substrate 101, the liquid coolant fills between graphite substrate 101 and the fuel rod, which may buffer changes in the temperature and volume, and on the one hand, which may prevent a tress problem caused by a sharply rising temperature on a wall surface of the graphite matrix 101 which is directly in contact with the fuel rod due to a drastic change of temperature, making the temperature gradient of the graphite matrix 101 unstable; on the other hand, the fuel rod is prevented from swelling due to the drastic change in temperature, which may press the graphite substrate 101 and affect the safety of the nuclear reaction process.

In an embodiment, the fuel rod may be a nuclear energy member filled with a spherical TRISO fuel.

In an embodiment, the liquid coolant can be a lead-bismuth coolant, which has a good radiation shielding property, may shield neutrons and gamma rays generated by the fission reactions, and may prevent surrounding organisms from being harmed by the radioactive radiation. Accordingly, lead-bismuth coolant fills between the graphite substrate 101 and the fuel rod, which creatively implements an integrated function of heat conduction and shielding.

In an embodiment, the heat pipe 102 is a liquid alkali metal heat pipe 102 filled with an alkali metal fluid medium.

The nuclear power supply device in the embodiments of the present invention includes a graphite substrate 101, a plurality of fuel rods, a plurality of heat pipes 102, and a thermoelectric converter 103. The graphite substrate 101 has a high thermal conductivity and is provided with a plurality of first through tubes and a plurality of second through tubes. The first through tube is filled with the liquid coolant; each fuel rod is respectively arranged in each first through tube and is configured to generate the thermal energy; the liquid coolant transfers the generated thermal energy to the graphite substrate 101, and then the thermal energy of the graphite substrate 101 is transferred to the thermoelectric converter 103 through the heat pipe 102 arranged in the second through tube to perform the thermoelectric conversion. Since the liquid coolant acts as a buffer between the fuel rod and the graphite substrate 101, and performs a transitional function on the thermal energy transferred from the fuel rod to the graphite substrate 101, thereby avoiding the impacts of the temperature gradient and fuel rod swelling on the graphite substrate 101, and improving the safety of the nuclear reaction process.

In an embodiment, the nuclear power supply device further includes a first thermoelectric power generation chip. The first thermoelectric power generation chip is attached to the thermoelectric converter 103 and is configured to perform the thermoelectric conversion according to the temperature of the wall surface of the thermoelectric converter 103.

It should be appreciated that after the thermal energy is transferred to the thermoelectric converter 103 through the heat pipe 102, a part of the thermal energy may be converted into electrical energy by the thermoelectric converter 103, and the other part may increase the overall temperature of the thermoelectric converter 103. At the moment, the first thermoelectric power generation chip may be attached onto the thermoelectric converter 103, in order to perform the thermoelectric conversion according to a temperature difference between the temperature on the wall surface of the thermoelectric converter 103 and an environment temperature, such as the temperature of low-temperature seawater or air. In addition, waste heat may also be discharged through seawater convection (in underwater applications) or air convection (in onshore applications).

In an embodiment, the thermoelectric converter 103 is an alkali metal thermoelectric converter 103. The alkali metal thermoelectric converter 103 has no moving component and generates no noise, and requires no maintenance. The alkali metal thermoelectric converter 103 can be combined with any form of heat source within a certain temperature range, and has advantages of high thermoelectric conversion efficiency and high heat rejection temperature.

In an embodiment, the nuclear power supply device further includes a neutron reflector 104, as shown in FIG. 1, the neutron reflector 104 wraps outside the graphite substrate 101. The neutron reflector 104 is configured to reflect an escaped neutron back to a reaction area when a nuclear reaction occurs in a nuclear reactor, thereby improving the reaction efficiency of the nuclear reactor.

The neutron reflector 104 can be made of a beryllium oxide material with a high thermal conductivity.

In an embodiment, the nuclear power supply device further includes an airtight container 105, as shown in FIGS. 1 and 2, the graphite substrate 101 is located in the airtight container 105, and the liquid lead-bismuth fluid 106 fills between the neutron reflector 104 and the airtight container 105. The airtight container 105 has a first through hole 107, and the heat pipe 102 passes through the first through hole 107 so that the first end is placed inside the second through tube.

It should be appreciated that a diameter of the heat pipe 102 may be equal to an inner diameter of the first through hole 107, and the heat pipe 102 is fixedly connected to the airtight container 105 through the first through hole 107, to form a whole which is convenient for moving and handling.

The liquid lead-bismuth fluid 106 fills between the neutron reflector 104 and the airtight container 105, thereby shielding the neutrons and gamma rays generated by the fission reactions, and preventing the surrounding organisms from being harmed by radioactive radiation, and meanwhile relieving thermal stresses of the reactor internals.

In an embodiment, the graphite substrate 101 may be located in a center of the airtight container 105.

The nuclear power supply device in the embodiments of the present invention is provided with the airtight container 105, the graphite substrate is located in the airtight container 105, and the liquid lead-bismuth fluid 106 fills between the neutron reflector 104 and the airtight container 105, thereby shielding the neutrons and gamma rays generated by the fission reactions, and preventing the surrounding organisms from being harmed by radioactive radiation, and meanwhile relieving the thermal stresses of the reactor internals. The airtight container 105 is provided with the first through hole 107, the heat pipe 102 passes through the first through hole 107 so that the first end is placed inside the second through tube, thereby transferring the thermal energy to the thermoelectric converter 103 to perform the thermoelectric conversion. The airtight container 105 can be assembled with the heat pipe 102 as a whole by means of the first through hole 107, so that the airtight container 105 is completely sealed. When the nuclear power supply device is placed under water, the nuclear reaction may not be affected by the water immersion.

In an embodiment, the nuclear power supply device further includes a second thermoelectric power generation chip 108. As shown in FIG. 1, the second thermoelectric power generation chip 108 is attached to an outer wall of the airtight container 105, and is configured to generate electricity according to a temperature of the outer wall of the airtight container 105.

It should be understood that part of the thermal energy generated by the fuel rod passes through the liquid coolant, the graphite substrate 101, the neutron reflector 104 and the liquid lead-bismuth fluid 106 in sequence, and is finally transferred to the airtight container 105, so that the overall temperature of the airtight container 105 rises. The second thermoelectric power generation chip 108 is attached to the outer wall of the airtight container 105, and can perform the thermoelectric conversion according to the temperature difference between the temperature of the wall surface of the airtight container 105 and the environment temperature, such as the temperature of low-temperature seawater or air. In addition, the waste heat can also be discharged through seawater convection (in underwater applications) or air convection (in onshore applications).

A plurality of second thermoelectric power generation chips 108 may be provided. The airtight container 105 may be in a cylindrical shape, and each second thermoelectric power generation chip 108 is evenly attached to the outer wall of the airtight container 105, as shown in FIG. 2.

The nuclear power supply device in the embodiments of the present invention further includes a second thermoelectric power generation chip 108. The second thermoelectric power generation chip 108 is attached to the outer wall of the airtight container 105, so that the thermoelectric conversion can be performed through the temperature difference between the temperature of the wall surface of the airtight container 105 and the environment temperature, accordingly the thermal energy generated by the nuclear reactions is fully utilized.

In an embodiment, the nuclear power supply device further includes a control drum 109 and a pre-pressurization device (not shown).

The control drum 109 is arranged in the neutron reflector 104, and the control drum 109 includes a neutron absorption portion. The pre-pressurization device is connected to the control drum 109, and is configured to control a rotation of the control drum 109 through a pneumatic pressurization mode, so that the neutron absorption portion faces the graphite substrate 101.

It should be understood that the control drum 109 can be in a cylinder shape, and the neutron absorption portion is provided in a radial direction of the control drum 109. When the pre-pressurization device rotates the control drum 109 and allows the neutron absorption portion to face the graphite substrate 101, the fuel rods can be shut down.

In an embodiment, a neutron reflection portion is further provided in the radial direction of the control drum 109. When the control drum 109 is rotated so that the neutron reflection portion faces the graphite substrate 101, and when the fuel rod undergoes a nuclear reaction, the neutron reflection portion can reflect a neutron which escapes in the reaction process back into the reaction area, thereby increasing the reactor power.

It should be appreciated that when the control drum 109 is rotated, the reactor power can be adjusted accordingly by adjusting the proportions of the neutron reflection portion and the neutron absorption portion on a side of the control drum 109 facing the graphite substrate 101.

The pre-pressurization device is based on the principle of pneumatic pressurization. When an extreme working condition of the reactor occurs that the control drum 109 cannot be shut down, the pre-pressurization device is automatically triggered to passively drive the control drum 109 to shut down the reactor. Compared to the condition of using an active device and a rotating component to drive the control drum 109, the overall structure of the nuclear power supply device in the embodiment is simpler, and the mass-to-power ratio is smaller. In addition, due to the passive characteristics of the pre-pressurization device, the entire nuclear reaction is in a static process without the participation of active components, and the thermoelectric converter 103, the first thermoelectric power generation chip and the second thermoelectric power generation chip 108 are utilized to obtain the thermal energy and perform the thermoelectric conversion through a natural heat conduction mode, all thermal transfer is implemented by the mechanical connections between components, which has extremely high inherent safety. The whole process truly realizes a pure static power generation, which effectively reduces the difficulty of operation and maintenance of the device, thereby essentially improving the safety, the reliability and the robustness of the nuclear reactor.

The nuclear power supply device in the embodiments of the present invention uses the nuclear fission of the fuel rod to generate the heat during normal operation of the reactor, and the generated heat is converted into thermoelectricity in two ways: one way is that the heat is transferred through the liquid coolant and the graphite substrate 101 with the high thermal conductivity to the heat pipe 102, and the heat pipe 102 transfers the heat to the thermoelectric converter 103, and then the thermoelectric conversion is performed by the thermoelectric converter 103. The thermoelectric converter 103 is configured to generate the electricity at the high temperature area. The other way is that the heat is transferred to the first thermoelectric power generation chip attached to the thermoelectric converter 103 and the second thermoelectric power generation chip 108 on the outer wall surface of the airtight container 105, the first thermoelectric power generation chip and the second thermoelectric power generation chip 108 use the temperature difference between the wall surface and seawater to generate the electricity respectively. The first thermoelectric power generation chip and the second thermoelectric power generation chip 108 are configured to generate electricity at the low temperature area. The entire nuclear power supply device can be placed in the seawater, and the remaining heat can be cooled by the seawater. In addition, when the reactor is under the extreme condition where the control drum 109 cannot be shut down, the pre-pressurization device is automatically triggered, and the control drum 109 is passively driven to rotate by the pre-pressurized gas, accordingly the reactor is immediately shut down to maintain the safety of the reactor.

In an embodiment, the graphite substrate 101 may include a plurality of sub-substrates, each sub-substrate is in a shape of a hexagonal prism and spliced together to form the graphite substrate 101 with the stable structure. The sub-substrate in the shape of the hexagonal prism has a certain structural strength.

In the description of the present invention, the description referring to the terms "some embodiments", "other embodiments", "ideal embodiments" and the like mean that the specific features, structures, materials, or characteristics described in combination with the embodiments or examples are included in at least one embodiment or example of the present invention. In the specification, schematic descriptions of the above terms do not definitely refer to the same embodiment or example.

The various technical features in the above-mentioned embodiments can be combined arbitrarily. For the sake of concise description, all possible combinations of the various technical features in the above-mentioned embodiments are not described. However, as long as there is no contradiction in the combinations of these technical features, the combinations of these technical features should be considered as falling within the scope of the present invention.

The above-mentioned embodiments merely express several implementation modes of the present application, and the descriptions thereof are relatively specific and detailed, but should not be construed as limiting the scope of the present invention. It should be noted that those skilled in the art can make several modifications and improvements without departing from the concept of the present invention, and these all fall within the protection scope of the present invention. Therefore, the scope of protection of the present invention should be subject to the appended claims.

## Claims

1. A nuclear power supply device, **characterized by** comprising:
a graphite substrate provided with a plurality of first through tubes and a plurality of second through tubes, each first through tube being filled with a liquid coolant;
a plurality of fuel rods, each of which is arranged in each first through tube and configured to generate thermal energy, the liquid coolant transferring the generated thermal energy to the graphite substrate;
a plurality of heat pipes, each of which has a first end and a second end, the first end of the heat pipe being arranged in a second through tube and configured to transfer the thermal energy on the graphite substrate; and
a thermoelectric converter connected to the second end of each heat pipe and configured to receive the thermal energy transferred by each heat pipe to perform a thermoelectric conversion on the thermal energy.

2. The nuclear power supply device according to claim 1, further comprising:
a first thermoelectric power generation chip attached to the thermoelectric converter and configured to perform the thermoelectric conversion according to a temperature of a wall surface of the thermoelectric converter.

3. The nuclear power supply device according to claim 2, wherein the thermoelectric converter is an alkali metal thermoelectric converter.

4. The nuclear power supply device according to claim 1, further comprising:
a neutron reflector wrapping outside the graphite substrate.

5. The nuclear power supply device according to claim 4, further comprising:
an airtight container, wherein the graphite substrate is located in the airtight container, and a liquid lead-bismuth fluid fills between the neutron reflector and the airtight container;
wherein the airtight container is provided with a first through hole, and the heat pipe passes through the first through hole so that the first end is placed inside the second through tube.

6. The nuclear power supply device according to claim 5, further comprising:
a second thermoelectric power generation chip attached to an outer wall of the airtight container and configured to generate electricity according to a temperature of the outer wall of the airtight container.

7. The nuclear power supply device according to claim 4, further comprising:
a control drum provided in the neutron reflector and including a neutron absorption portion; and
a pre-pressurization device connected to the control drum and configured to control a rotation of the control drum through a pneumatic pressurization mode to allow the neutron absorption portion to face the graphite substrate.

8. The nuclear power supply device according to claim 1, wherein the graphite substrate comprises a plurality of sub-substrates each of which is in a shape of a hexagonal prism and which are spliced together as a whole.

9. The nuclear power supply device according to claim 1, wherein the liquid coolant is a liquid lead-bismuth fluid.

10. The nuclear power supply device according to claim 1, wherein the heat pipe is a liquid alkali metal heat pipe.
